# EUROPEAN PATENT APPLICATION

(11) **EP 2 514 755 A2**
(43) Date of publication of application: **24.10.2012**
(21) Application number: 10837886.0
(22) Date of filing: 16.12.2010
(51) Int. Cl.: C07F 9/00, G02B 5/22

(54) **VANADYL PHTHALOCYANINE COMPOUNDS AND NEAR-INFRARED ABSORPTION FILTERS USING SAME**

(30) Priority: 18.12.2009 KR 20090126778
(71) Applicant: SK Chemicals, Co., Ltd., Gyeonggi-do 464-400 (KR)
(72) Inventor: CHANG, Yu-Mi, Gyeonggi-Do 464-010 (KR); PARK, Jeong-Ho, Gyeonggi-Do 440-716 (KR); KANG, Ju-Sik, Gyeonggi-Do 442-010 (KR)
(74) Representative: TER MEER - STEINMEISTER & PARTNER GbR
(86) International application number: PCT/KR2010/009015
(87) International publication number: WO 2011/074890

(57) **Abstract**

Novel vanadyl phthalocyanine compound having low light absorptivity in visible wavelength region and having high absorptivity in a long wavelength region (specifically, wavelength of 950 to 1100 nm) of near-infrared wavelength region and a near-infrared absorption filter using the same are disclosed. The vanadyl phthalocyanine compound is represented by Formula 1 in claim 1.

## Description

### FIELD OF THE INVENTION

This invention relates to a vanadyl phthalocyanine compound and a near-infrared absorption filter using the same, and more particularly to a novel vanadyl phthalocyanine compound having low light absorptivity in visible wavelength region and having high light absorptivity in a long wavelength region (specifically, wavelength of 950 to 1100 nm) of near-infrared wavelength region, and a near-infrared absorption filter using the same.

### BACKGROUNDS OF THE INVENTION

Phthalocyanine compounds were originally developed as a pigment, and are thermally and chemically stable. The solubility and the light absorption property of the phthalocyanine compound can be varied according to its substituents which are introduced into the outer structure of the compound. Therefore, the phthalocyanine compounds are being widely used in various fields which require thermal and chemical stability. For example, the compounds are used as pigments for an organic photo conductor of a laser printer, near-infrared light absorption pigments for a near-infrared absorption filter of a display device such as PDP(plasma display panel), sensitizers for a solar cell, near-infrared light absorption pigments for a near-infrared absorption filter of a house or an automobile for blocking heat, and so on. Recently, among the above mentioned applications, the usage as the near-infrared light absorption pigment for a near-infrared absorption filter is greatly increased according to rapid growths of a display device industry and an environment-related industry (for energy-saving by blocking heat).

The near-infrared absorption pigment for a PDP must have high light absorptivity in the wavelength region of 800 to 1100 nm, but have low light absorptivity (namely, high transmittance) in visible light region, in order to absorb and block the near-infrared light which causes the malfunction of a remote controller for a display device and in order to improve color display property (color reproductivity) of the display device. As the near-infrared absorption pigment, not only phthalocyanine compound but also various compounds such as cyanine based compounds, nickel-dithionyl based compounds, diimonium based compounds and so on, can be used. However, the cyanine based compounds are not preferable because of a low heat resistance and a narrow light absorption region. The diimonium based compounds cannot be used in various applications because of an inferior durability to an environment such as moisture and an inferior compatibility with polymer materials, and is not suitable for coating application for preparing a near-infrared absorption filter. Also, the nickel-dithionyl based compounds cannot be used in various applications because of its low solubility, even though they have an advantage of low light absorption property in visible light region.

Compared with other compounds, the phthalocyanine compounds have superior durability and whether resistance, and solubility thereof can be controlled by changing the substituents positioned at the outer structure of the compound. The absorptivity of the phthalocyanine compounds in the region of 800 to 950 nm can be relatively easily increased by changing the central metal thereof. Therefore, it has been known that the phthalocyanine compounds are suitable as a coating type near-infrared absorption pigment for a PDP. The conventional phthalocyanine compounds also have a good absorptivity in the region of 800 to 950 nm. However, the conventional phthalocyanine compounds do not have sufficient absorptivity in the region of 950 to 1000 nm which is the major part of the near infrared light generated from the PDP. As the conventional phthalocyanine compounds have a narrow absorption wavelength region, it is necessary to use, at the same time, at least 3 kinds of pigments (phthalocyanine compounds each having a different maximum absorption wavelength) to prepare the near-infrared absorption filter. However, when at least 3 kinds of pigments are used as a mixture, the product quality is difficult to control, and the manufacturing process becomes complicated.

To solve these problems, there were many attempts for preparing phthalocyanine compounds having broad and high absorptivity in the region of 950 to 1000 nm by changing the central metals or by changing the substituents. However, the absorptivity in the region of 950 to 1000 nm is not desirable when using phenol, thiophenol or various primary amine compounds as the substituents. When using other substituents, the light absorptivity in visible light region increases which deteriorates the color display property.

### SUMMARY OF THE INVENTION

Therefore, it is an object of the present invention to provide a vanadyl phthalocyanine compound having broad and high absorptivity in a long wavelength region (specifically, in the wavelength of 950 to 1100 nm) of near-infrared light region, and having superior transmittance in visible light region(specifically, in the wavelength of 400 to 700 nm).

It is other object of the present invention to provide a near-infrared absorption filter including one or two kinds of the vanadyl phthalocyanine compounds as the near-infrared absorption pigments.

In order to achieve these objects, the present invention provides a vanadyl phthalocyanine compound represented by following Formula 1.

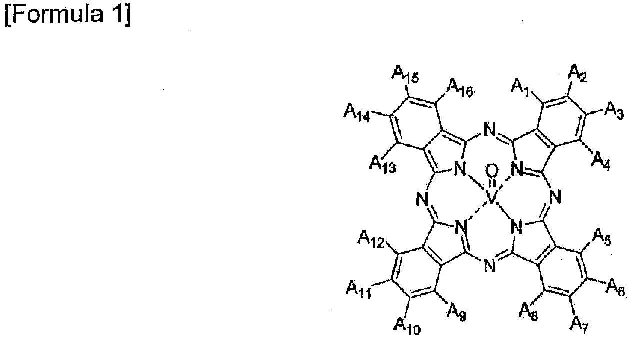

In Formula 1, A₂, A₃, A₆, A₇, A₁₀, A₁₁, A₁₄ and A₁₅ are SR₁; A₁, A₄, A₅, A₈, A₉, A₁₂, A₁₃ and A₁₆ are independently SR₁, OR₂, NHR₃, NR₄R₅ or a halogen atom, wherein at least four thereof are OR₂, and one to four thereof are NR₄R₅; R₁, R₂, R₃, R₄ and R₅ are independently a substituted or unsubstituted alkyl group of 1 to 10 carbon atoms, a substituted or unsubstituted aryl group of 6 to 14 carbon atoms, or a substituted or unsubstituted aralkyl group of 7 to 20 carbon atoms, and R₄ and R₅ can be connected to form a cyclic structure.

The present invention also provides a near-infrared absorption filter which comprises the vanadyl phthalocyanine compound.

The vanadyl phthalocyanine compound of the present invention has a maximum absorption wavelength in the range of 950 to 1100 nm, and has a desirable FWHM(Full Width at Half Maximum) and a desirable absorptivity at the maximum absorption wavelength. When a light transmittance (T%) of the compound of the present invention is 10% at the maximum absorption wavelength, the transmittance (T%) in visible light region (at about 450 nm) is equal to or more than 75%. According to the present invention, the near-infrared absorption filter can be prepared with one or two kinds of phthalocyanine compounds as the near-infrared absorption pigments. Thus, the compatibility problem of using at least three kinds of phthalocyanine compounds, can be avoided, and the near-infrared absorption filter can be produced with a simple and economical process.

### BRIEF DESCRIPTION OF THE ATTACHED DRAWINGS

Fig. 1 is a UV/VIS absorption spectrum of vanadyl phthalocyanine compounds prepared in Examples 1~3 and Comparative Example 1.
Fig. 2 is a UV/VIS transmission spectrum of vanadyl phthalocyanine compounds prepared in Examples 1~3 and Comparative Example 1.

### DETAILED DESCRIPTION OF THE INVENTION

A more complete appreciation of the invention, and many of the attendant advantages thereof, will be better appreciated by reference to the following detailed description.

The vanadyl phthalocyanine compound of the present invention is a near-infrared light absorbing compound which has a broad and high absorptivity in the long wavelength region (specifically, 950 to 1100 nm) of a near-infrared wavelength region and has a superior transmittance in a visible wavelength region (specifically, 400 to 700 nm), and is represented by the following Formula 1.

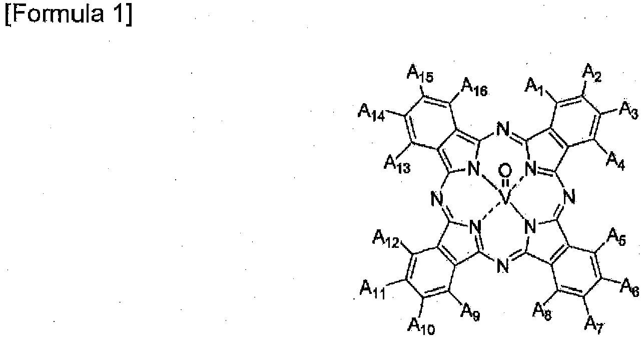

In Formula 1, A₂, A₃, A₆, A₇, A₁₀, A₁₁, A₁₄ and A₁₅ are SR₁. A₁, A₄, A₅, A₈, A₉, A₁₂, A₁₃ and A₁₆ are independently SR₁, OR₂, NHR₃, NR₄R₅ or a halogen atom, wherein at least four (4) thereof are OR₂, and one to four (1 ~ 4) thereof are NR₄R₅. R₁, R₂, R₃, R₄ and R₅ are independently a substituted or unsubstituted alkyl group of 1 to 10 carbon atoms, preferably 1 to 6 carbon atoms, a substituted or unsubstituted aryl group of 6 to 14 carbon atoms, preferably 6 to 10 carbon atoms, or a substituted or unsubstituted aralkyl group of 7 to 20 carbon atoms, preferably 7 to 16 carbon atoms. R₄ and R₅ can be connected to form a cyclic structure, and in this case, NR₄R₅ may form a heterocyclic compound of 4 to 20 carbon atoms, preferably 4 to 8 carbon atoms, such as pyrrolidine, piperidine, and so on.

The vanadyl phthalocyanine compound of the present invention can be prepared by a conventional method for preparing a phthalocyanine compound, and, for example, can be prepared by a high temperature reaction of substituted dicyanobenzene or substituted diiminoisoindoline in the presence of a suitable catalyst. Preferably, the phthalocyanine compound of the present invention can be prepared with substituted dicyanobenzene as disclosed in various papers (for example, Inorg. Chem. 1995, 34, 1636-1637) and patents(for example, Japanese patent Laid-open No. 1997-316049).

Preferably, the vanadyl phthalocyanine compound of the present invention has a maximum absorption wavelength at the region of 950 to 1000 nm, a FWHM(Full Width at Half Maximum) at the maximum absorption wavelength of 50 to 150 nm, and an absorption coefficient (ε, unit: ml/g·cm) of 50,000 to 70,000. In addition, when the transmittance (T%) of the compound of the present invention at the maximum absorption wavelength is 10%, the transmittance (T%) thereof at the visible wavelength region (about 450 nm) is equal to or more than 75%.

The vanadyl phthalocyanine compound of the present invention can be used for preparing a near-infrared absorption filter according to a conventional method, and the vanadyl phthalocyanine compound works as a pigment of the near-infrared absorption filter. A polymer resin for preparing the near-infrared absorption filter may include almost all conventional transparent polymer resins such as polymethyl methacrylate, polyester, polycarbonate, polyurethane and so on. The polymer resin can be selected according to its heat resistance, weather resistance and so on with considering the specific use of the near-infrared absorption filter. The near-infrared absorption filter can be prepared by the steps of dissolving the near-infrared absorption pigment in a solvent, and then coating the pigment solution on the polymer resin. As the solvent, various solvents such as methylethylketone, tetrahydrofuran, chloroform, toluene, and so on, can be used.

### MODE FOR INVENTION

Hereinafter, examples and comparative examples are provided for specific explanation of the present invention. However, the present invention is not limited to the following examples.

### [Example 1] Preparation of vanadyl phthalocyanine compound

10 g of vanadyl (vanadium oxide) phthalocyanine (VOPc: Oxo-Vanadium Phthalocyanine) precursor compound VOPc(PhS)₈{2,6-(CH₃)₂PhO}₄F₄ (wherein, Ph = phenyl, A₂, A₃, A₆, A₇, A₁₀, A₁₁, A₁₄ and A₁₅ of Formula 1 are PhS) whose UV/VIS maximum absorption wavelength is 797 nm and absorption coefficient (ε) is 103,000 ml/g·cm, was introduced into a 3-neck flask having a reflux condenser, and then reacted with 200 ml of pyrrolidine at 60 °C for 2 hours. After completion of the reaction, the reaction solution was filtered and vacuum-evaporated to obtain vanadyl phthalocyanine compound VOPc(PhS)₈{2,6-(CH₃)₂PhO}₄(C₄H₈N)₄. The maximum absorption wavelength of the produced vanadyl phthalocyanine compound was 962 nm, and the absorption coefficient was 61,400 ml/g·cm.

### [Example 2] Preparation of vanadyl phthalocyanine compound

10g of vanadyl phthalocyanine precursor compound VOPc(4-CH₃OPhS)₈ {2,6-(CH₃)₂PhO}₄F₄ whose UV/VIS maximum absorption wavelength is 803 nm and absorption coefficient(ε) is 96,400 ml/g·cm, was introduced into a 3-neck flask having a reflux condenser, and then reacted with 200 ml of pyrrolidine at 60 °C for 2 hours. After completion of the reaction, the reaction solution was filtered and vacuum-evaporated to obtain vanadyl phthalocyanine compound VOPc(4-CH₃OPhS)₈{2,6-(CH₃)₂PhO}₄ (C₄H₈N)₄. The maximum absorption wavelength of the produced vanadyl phthalocyanine compound was 972 nm, and the absorption coefficient was 59,200 ml/g·cm.

### [Example 3] Preparation of vanadyl phthalocyanine compound

10g of VOPc(PhS)₈{2,6-(CH₃)₂PhO}₄F₄ was introduced into a 3-neck flask having a reflux condenser, and then reacted with 200 ml of dibutyl amine at 160 °C for 48 hours. After completion of the reaction, the reaction solution was filtered and vacuum-evaporated to obtain vanadyl phthalocyanine compound VOPc(PhS)₈ {2,6-(CH₃)₂PhO}₄(C₈H₁₈N)₄. The maximum absorption wavelength of the produced vanadyl phthalocyanine compound was 954 nm, and the absorption coefficient was 58,300 ml/g·cm.

### [Comparative Example] Preparation of vanadyl phthalocyanine compound

10 g of 3,4,5,6-tetrafluorophthalonitrile, 10 g of thiophenol, and 7 g of potassium fluoride were introduced into a 3-neck flask having a reflux condenser, and 30 ml of acetonitrile was added thereto as a solvent, and the reaction was carried out at room temperature for 12 hours while stirring. After completion of the reaction, 7 g of 2,6-dimethylphenol and 4 g of potassium fluoride were added into the reaction solution, and further reacted for 8 hours while refluxing. After completion of the reaction, the reaction solution was vacuum-evaporated. 20 g of the obtained crude product was added into a 3-neck flask having a reflux condenser, and reacted with 2 g of vanadium trichloride, 2 g of 1-octanol, and 30 g of benzonitrile for 8 hours while refluxing. After completion of the reaction, the reaction solution was vacuum-evaporated to obtain crude vanadyl phthalocyanine precursor VOPc(PhS)₈{2,6-(CH₃)₂PhO}₄F₄. 10 g of the crude vanadyl phthalocyanine precursor and 50 ml of cyclohexylamine were added into a 3-neck flask having a reflux condenser, and reacted at 60°C for 8 hours. After completion of the reaction, the reaction solution was vacuum-evaporated to obtain vanadyl phthalocyanine compound VOPc(PhS)₈{2,6-(CH₃)₂PhO}₄(C₆H₁₁NH)₄. The maximum absorption wavelength of the produced vanadyl phthalocyanine compound was 932 nm, and the absorption coefficient of the compound was 57,100 ml/g·cm.

### [Experimental Example] Analysis of UV/VIS spectrum

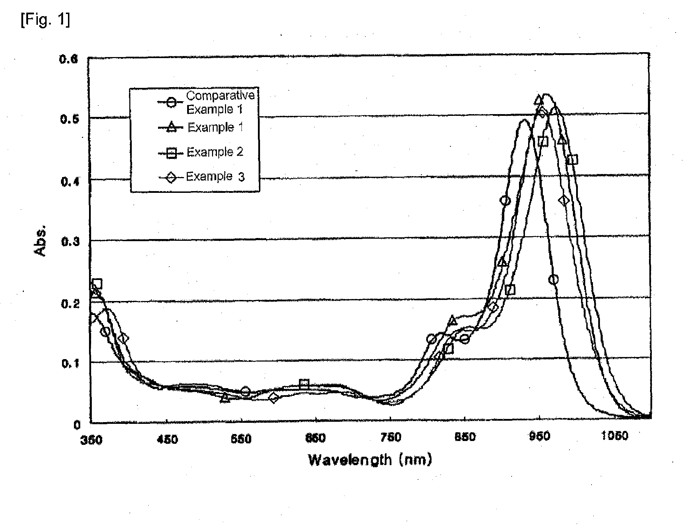

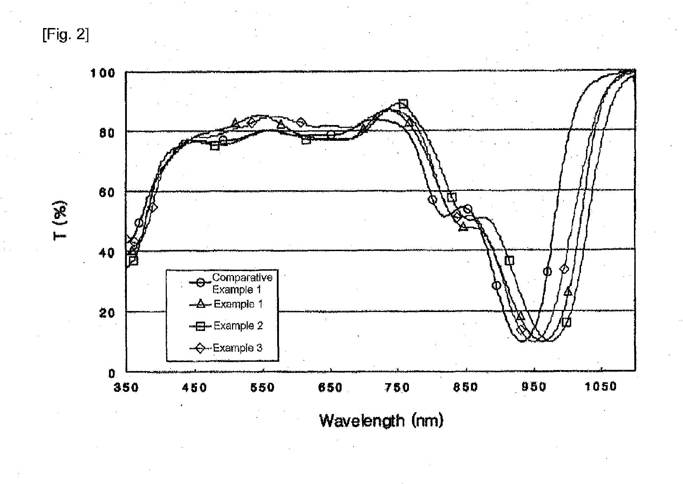

The vanadyl phthalocyanine compounds prepared in Examples 1~3 and Comparative Example 1 were diluted with toluene to the concentration of 10 ppm, and their UV/VIS spectra were measured, respectively. The UV/VIS absorption spectra of the vanadyl phthalocyanine compounds prepared in Examples 1~3 and Comparative Example 1 are shown in Fig. 1, and the maximum absorption wavelength and the absorption coefficient (ml/g•cm) were calculated from Fig. 1. Also, the UV/VIS transmission spectra of the vanadyl phthalocyanine compounds prepared in Examples 1~3 and Comparative Example 1 are shown in Fig. 2, and the maximum absorption wavelength in the near-infrared wavelength region and the transmittance in the visible wavelength region(namely, 455 nm) were calculated from Fig. 2, and the results were shown in Table 1. In this case, the transmittance in the visible wavelength region means a transmittance when the transmittance at the maximum absorption wavelength is fixed to 10%. FWHM (nm) means a difference between the wavelengths having the absorption coefficient which corresponds to a half of the absorption coefficient at the maximum absorption wavelength.

**[Table 1]**

| | Transmittance (455 nm) | Transmittance (Maximum absorption wavelength) | FWHM (nm) | Absorption coefficient (ml/g·cm) |
|---|---|---|---|---|
| Example 1 | 78.9% | 10% (962 nm) | 102 | 61,400 |
| Example 2 | 76.5% | 10% (972 nm) | 98 | 59,200 |
| Example 3 | 78.5% | 10% (954 nm) | 92 | 58,300 |
| Comparative Example 1 | 76.7% | 10% (932 nm) | 79 | 57,100 |

As shown in Table 1, the vanadyl phthalocyanine compounds (Examples 1~3) of the present invention have longer maximum absorption wavelengths, broader FWHMs and larger absorption coefficients than those of the vanadyl phthalocyanine compound of Comparative Example 1. Thus, vanadyl phthalocyanine compound of the present invention has a broad and high absorptivity at the long wavelength region(950 to 1100 nm) in the near-infrared wavelength region and has superior transmittance in the visible wavelength region.

The vanadyl phthalocyanine compound of the present invention is a near-infrared absorption pigment and is useful for preparing a near-infrared absorption filter.

## Claims

1. A vanadyl phthalocyanine compound represented by following Formula 1, 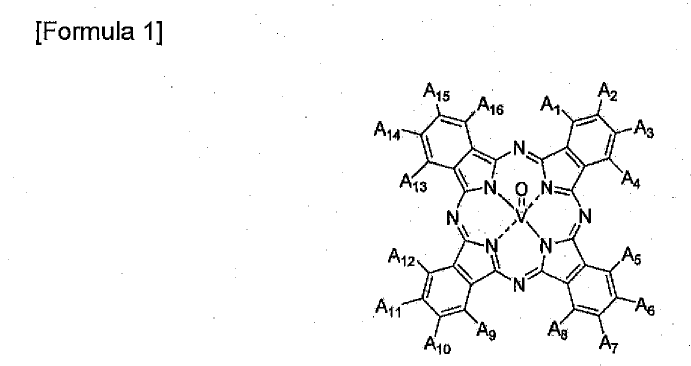 in Formula 1, A₂, A₃, A₆, A₇, A₁₀, A₁₁, A₁₄ and A₁₅ are SR₁; A₁, A₄, A₅, A₈, A₉, A₁₂, A₁₃ and A₁₆ are independently SR₁, OR₂, NHR₃, NR₄R₅ or a halogen atom, wherein at least four thereof are OR₂, and one to four thereof are NR₄R₅; R₁, R₂, R₃, R₄ and R₅ are independently a substituted or unsubstituted alkyl group of 1 to 10 carbon atoms, a substituted or unsubstituted aryl group of 6 to 14 carbon atoms, or a substituted or unsubstituted aralkyl group of 7 to 20 carbon atoms, and R₄ and R₅ can be connected to form a cyclic structure.

2. A near-infrared absorption filter comprising a vanadyl phthalocyanine compound of claim 1.
